# EUROPEAN PATENT SPECIFICATION

(11) **EP 3 713 180 B1**
(45) Date of publication and mention of the grant of the patent: **01.09.2021**
(21) Application number: 18875470.9
(22) Date of filing: 10.05.2018
(51) Int. Cl.: H04L 29/06, H04L 29/08, H04L 12/24, G06F 8/76

(54) **RSSP-I SECURITY PROTOCOL SEPARATE DEPLOYMENT METHOD**
VERFAHREN ZUM GETRENNTEN EINSATZ EINES RSSP-I-SICHERHEITSPROTOKOLLS
PROCÉDÉ DE DÉPLOIEMENT SÉPARÉ DE PROTOCOLE DE SÉCURITÉ RSSP-I

(30) Priority: 13.11.2017 CN 201711112975
(43) Date of publication of application: 23.09.2020
(73) Proprietor: CRSC Research & Design Institute Group Co., Ltd., Beijing 100070 (CN)
(72) Inventor: GUO, Weiwei, Beijing 100070 (CN); LIU, Zhen, Beijing 100070 (CN); WANG, Yimin, Beijing 100070 (CN); ZUO, Lin, Beijing 100070 (CN); HUANG, Yaqian, Beijing 100070 (CN); LI, Qiang, Beijing 100070 (CN); YU, Qing, Beijing 100070 (CN); LIU, Xiaodong, Beijing 100070 (CN)
(74) Representative: Huang, Liwei
(86) International application number: PCT/CN2018/086258
(87) International publication number: WO 2019/091073

(56) References cited:
- CN-A- 102 523 229
- WEIWEI GUO ET AL: "Verification and Analysis of RSSP-1 Protocol Based on Colored Petri Nets", BUSINESS COMPUTING AND GLOBAL INFORMATIZATION (BCGIN), 2012 SECOND INTERNATIONAL CONFERENCE ON, IEEE, 12 October 2012 (2012-10-12), pages 592-595, XP032283018, DOI: 10.1109/BCGIN.2012.160 ISBN: 978-1-4673-4469-2
- NIE, YAOPING: "Research on Communication Security of High-speed Railway Train Control System", Master Thesis, 15 November 2016 (2016-11-15), pages 1-73, XP009520955, ISSN: 1674-0246

## Description

### TECHNICAL FIELD

The present disclosure relates to a technical field of safety communication, and particularly, to a separated deployment method (as in claim 1) of Railway Signal Safety Communication Protocol I (RSSP-I) safety protocol.

### BACKGROUND

A RSSP-I safety communication protocol is applicable to safety related communication in a closed transmission system, and used for ensuring safety of data interaction in a closed transmission system environment, ensuring safety of data transmission between safety related products and promoting reliability and availability of data transmission.

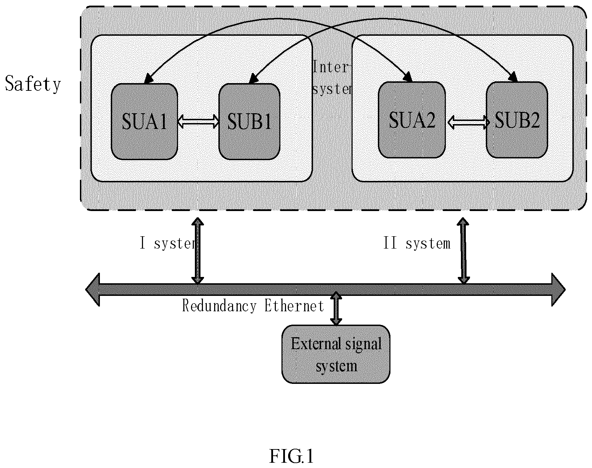

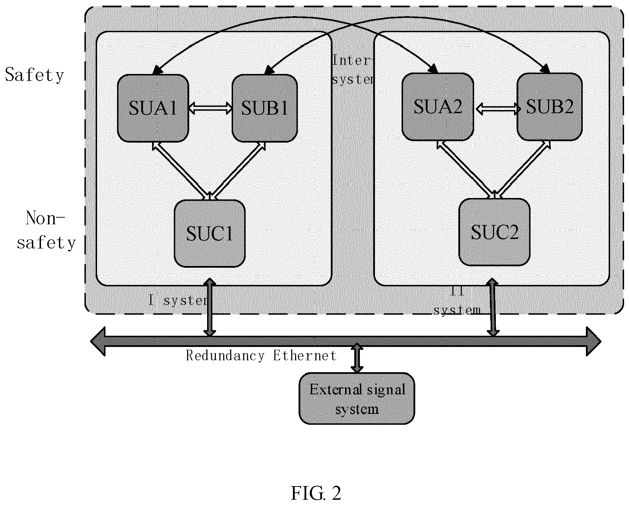

In an existing railway vital computer system, mostly a double 2-vote-2 computer structure and dual-redundancy design are adopted, and generally, there are two platform implementation modes: as shown in FIG. 1, in a first platform implementation method, a safety function and a non-safety function are not distinguished, and each system includes an A/B machine; and as shown in FIG. 2, in a second platform implementation method, the safety function and the non-safety function are distinguished, and each system includes a safety logic processing unit A/B machine and a communication unit C machine, wherein the logic processing unit A/B machine undertakes the safety function, and the communication unit C machine does not undertake the safety function, and a logic processing unit and a communication unit carry out data interaction in an Ethernet mode.

However, currently, in the case that the RSSP-I safety communication protocol is deployed, due to different platform structures in an actual environment, a current method for deploying RSSP-I safety communication protocol cannot meet requirements of different platform structures.

WEIWEI GUO ET AL: "Verification and Analysis of RSSP-1 Protocol Based on Colored Petri Nets" (BUSINESS COMPUTING AND GLOBAL INFORMATIZATION (BCGIN), 2012 SECOND INTERNATIONAL CONFERENCE ON, IEEE, 12 October 2012 (2012-10-12), pages 592-595) discloses a system using RSSP-1 Railway Signal Safety Communication Protocol.

### SUMMARY

The present disclosure aims to provide a separated deployment method of RSSP-I safety protocol, to improve diversity of a deployed RSSP-I safety communication protocol and implement separated deployment on different architecture platforms.

In order to fulfill the aim above, the present disclosure provides a separated deployment method RSSP-I safety protocol as defined in claim 1.

Further, all functional modules of the RSSP-I include a SFM layer and a CFM layer, the SFM layer is a safety functional module, the CFM layer is a non-safety functional module, and the SFM layer and the CFM layer are of a logic structure from top to bottom.

Further, the compiling all functional modules of an RSSP-I of the protocol stack into static logic libraries and deploying the static logic libraries into the A and/or B machine by utilizing the corresponding adaption layers, specifically includes:
In a platform with an A/B architecture, compiling all functional modules of the RSSP-I of the protocol stack into static logic libraries, and implementing the AAL, the NAL and the SAL in the A/B machine to deploy the static logic libraries into a Central Processing Unit (CPU) of the A/B machine; and
Connecting the SFM layer and the CFM layer of all functional modules of the RSSP-I by the D-IF adaption layer.

Further, the compiling all functional modules of an RSSP-I of the protocol stack into static logic libraries and deploying the static logic libraries into the A and/or B machine by utilizing the corresponding adaption layers, further includes:
Respectively compiling the SFM layer and the CFM layer of the functional modules of the RSSP-I of the protocol stack into two static logic libraries; and
Deploying the static logic library obtained by compiling the SFM layer into the CPU of the A/B machine, and deploying the static logic library obtained by compiling the CFM layer into a CPU of the C machine.

Further, the SFM layer and the CFM layer of all the functional modules of the RSSP-I are connected by the D-IF adaption layer.

Compared to the prior art, the present disclosure has the technical effects that: according to the present disclosure, a series of adaption layers are developed around a RSSP-I safety communication protocol core logic layer, then the corresponding adaption layers are added for the protocol stack according to architectures of target platforms and types of the functional modules and different functional modules are compiled into the static logic libraries and deployed into the platforms, so that the RSSP-I communication protocol can be developed into cross-platform portable universal safety software protocol libraries, thereby implementing protocol deployment on the platforms with different architectures.

### BRIEF DESCRIPTION OF THE DRAWINGS

Specific embodiments of the present disclosure will be described in detail with reference to the drawings:
FIG. 1 is a structural schematic diagram of a vital computer which is mentioned in the background of the present disclosure and of which each system includes an A/B machine;
FIG. 2 is a structural schematic diagram of a vital computer which is mentioned in the background of the present disclosure and of which each system includes an A/B machine and a C machine;
FIG. 3 is a schematic diagram of core logic layers of a RSSP-I safety communication protocol stack mentioned in the background of the present disclosure;
FIG. 4 is a flow schematic diagram of a separated deployment method of RSSP-I safety protocol in the present disclosure;
FIG. 5 is a schematic diagram of deploying an RSSP-I safety protocol into an A/B architecture platform in the present disclosure;
FIG. 6 is a schematic diagram of a software module architecture of the RSSP-I safety communication protocol stack in the present disclosure;
FIG. 7 is a deployment schematic diagram of deploying the RSSP-I safety protocols to the A/B and C architecture platforms in the present disclosure;
FIG. 8 is a schematic diagram of a software safety functional phase module architecture of the RSSP-I safety communication protocol stack in the present disclosure; and
FIG. 9 is a schematic diagram of a software non-safety functional phase module architecture of the RSSP-I safety communication protocol stack in the present disclosure.

### DETAILED DESCRIPTION

In order to further illustrate the characteristics of the present disclosure, please refer to the detailed illustration and drawings related to the present disclosure. The drawings are merely used for reference and illustration, but not intended to define the scope of the present disclosure.

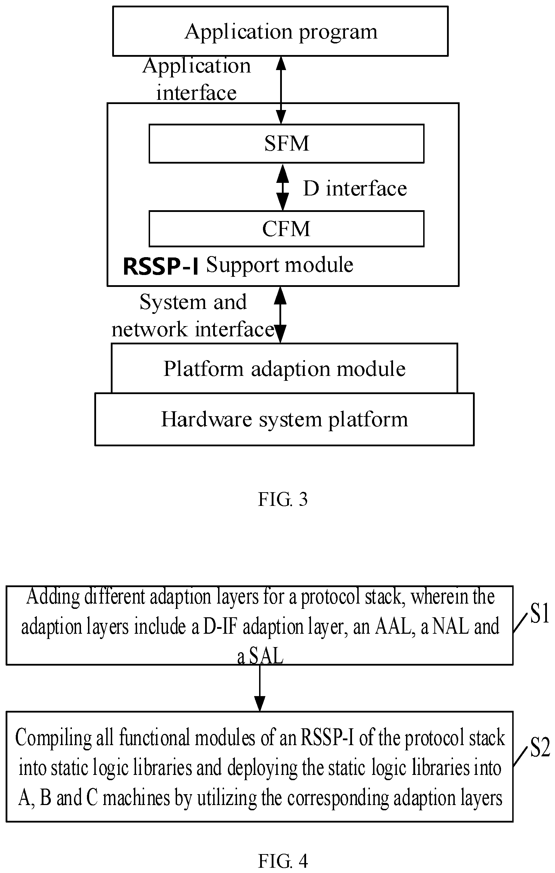

As shown in FIG. 3 to FIG. 4, an embodiment discloses a separated deployment method of RSSP-I safety protocol, including steps S1 to S2 as follows:
S1: adding different adaption layers for a protocol stack, wherein the adaption layers include a D-IF adaption layer, an AAL, a NAL and a SAL; and
S2: compiling all functional modules of an RSSP-I of the protocol stack into static logic libraries and deploying the static logic libraries into A, B and C machines by utilizing the corresponding adaption layers.

Wherein, as shown in FIG. 3, the RSSP-I safety communication protocol in the embodiment adopts structural design and is developed in a layered modular mode, and core logic layers of the safety communication protocol stack include a SFM layer and a CFM layer from top to bottom, wherein the SFM layer is a safety functional module, the CFM layer is a non-safety functional module, each layer of functional module is relatively independent, interface partition is distinguished distinctly, and interfaces between adjacent layers have a calling relationship. The SFM layer achieves a communication threat protection function and a safety transmission function in a transmission system, achieves a function of periodic automatic triggering of time sequence correction processing as required by certain platforms, and can provide a functional interface regulated in the software structural design for a lower layer. The CFM layer provides a redundancy function for data transmission of the safety communication protocol, is used as an adaption and redundancy layer entity, takes charge of managing a plurality of physical connections for data transmission and enables one logic to send and receive data by a plurality of physical channels so as to ensure usability and safety of communication, and at the CFM level, for each logic connection, the CFM layer needs to achieve redundancy processing, data transmission and channel availability monitoring functions.

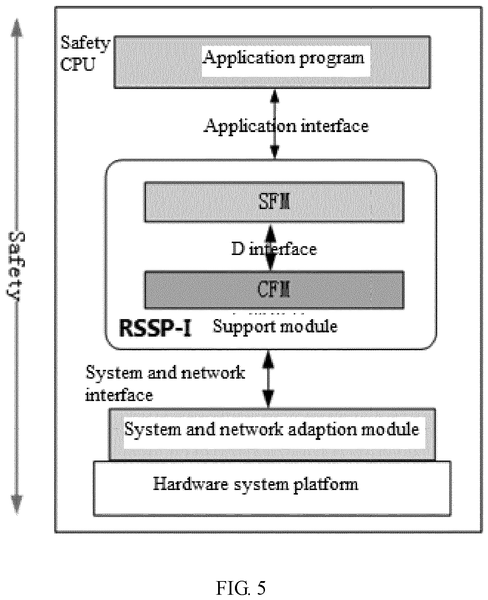

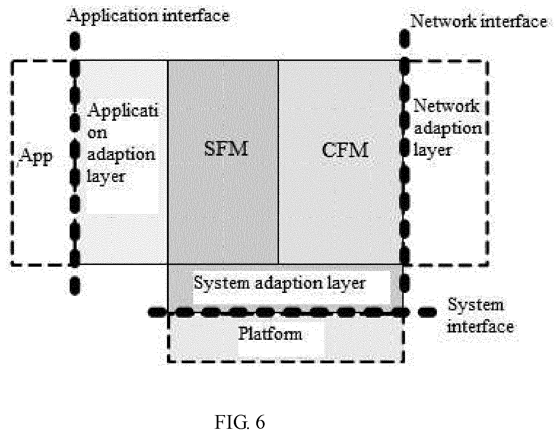

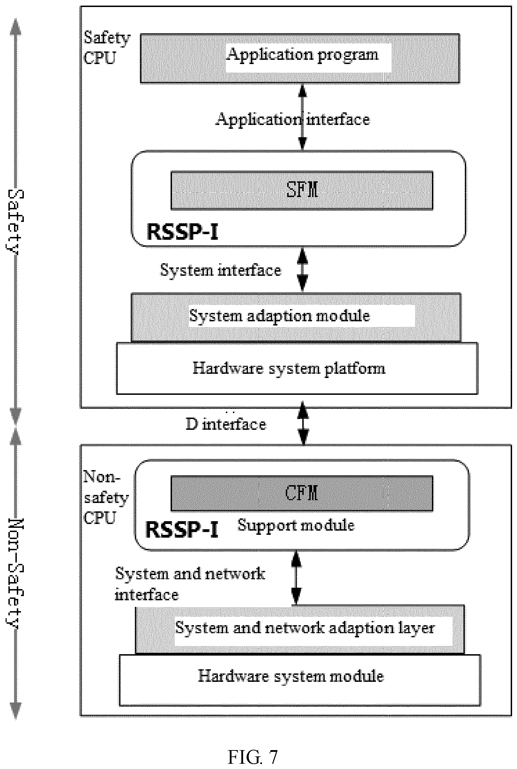

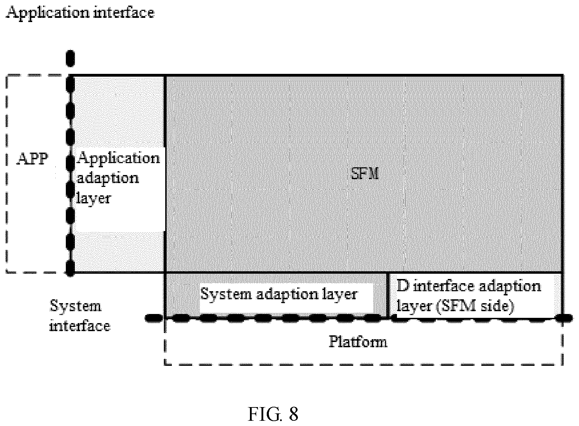

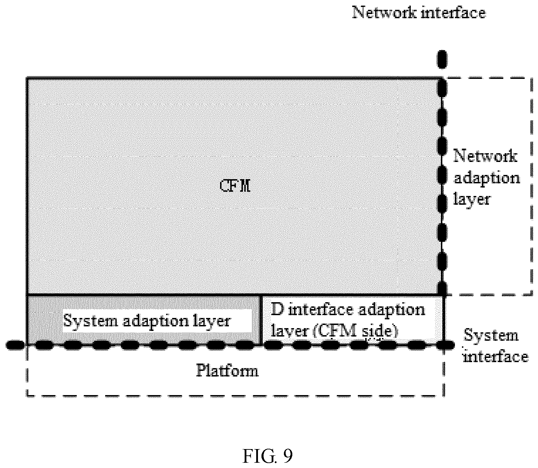

It should be noted that in the embodiment, for different target architecture platforms and functional modules, porting of the software protocol stack can adopt two modes as follows:
(1) As shown in FIG. 5 to FIG. 6, in an A/B architecture platform, the functional modules of the RSSP-I of the protocol stack are compiled into the static logic libraries, the AAL, the NAL and the SAL are implemented in an A/B machine to deploy the static logic libraries in a CPU of the A/B machine, and the functional modules of the RSSP-I, e.g., the SFM layer and the CFM layer, are connected by the D-IF adaption layer.
(2) As shown in FIG. 7 to FIG. 9, in an A/B double-CPU safety logic processing unit and communication unit C architecture platform, the functional modules of the RSSP-I of the protocol stack, e.g., the SFM layer and the CFM layer, are respectively compiled into two static logic libraries; and then the static logic library obtained by compiling the SFM layer is deployed into the CPU of the A/B machine, and the static logic library obtained by compiling the CFM layer is deployed to a CPU of a C machine.

It should be noted that in order to implement separated deployment on the SFM layer and the CFM layer, according to the embodiment, by the D-IF adaption layer, a D primitive cache mechanism is implemented and used for carrying out information interaction between the SFM layer and the CFM layer.

Wherein, the AAL is used for implementing the SFM primitive cache mechanism and used for carrying out information interaction with an application layer program; and the RSSP-I safety communication protocol software AAL refers to a functional interface with application software or calling framework software operating a software protocol library. Operation interface functions defined by the interface include: a function of controlling the software protocol library to carry out operations of sending data, providing safety connection establishment and disconnection indication to the software protocol library and the like, a function of error reporting and the like.

The SAL completes system interface functions including a function of supporting a series of system functions required for operation of a protocol stack software library, and further includes a protocol stack internal data initialization interface and a synchronization/comparison interface related to the platforms. The SAL is used for providing necessary universal system functional supporting interfaces, such as a timer, log output, a panic processing function, some common system functions and the like, for an application logic layer. On a ported target platform, a corresponding platform adaption layer needs to be developed.

The NAL is used for providing a network adaption service for the CFM layer, and an interface between the network adaption layer and the CFM layer is a network interface. The RSSP-I safety communication protocol stack software network interface mainly implements transceiving of network data. The RSSP-I network adaption layer only can receive an instruction issued by the CFM layer of the safety communication protocol stack to carry out a corresponding action. The CFM layer may become an external event of the NAL for all network-related operations including: actively connecting a network communication channel, sending network data, actively receiving the network data, releasing the network communication channel and the like.

In the embodiment, for porting requirements of different architecture platforms, different compiling modes are used; all the compiling modes use the same set of codes; a compiling object is determined by using different configuration options; after simple configuration of the codes, the static logic libraries generated by a compiler for specific platforms can be directly used.

Moreover, a RSSP-I safety communication protocol software library product, due to universality and portability in terms of code development, can orient various hardware platforms to carry out direct compiling or cross compiling, and can form static link libraries for release. A series of adaption module layers need to be developed around a RSSP-I safety communication protocol core logic layer to complete functions of different types of functional interfaces, and include platform adaptions such as application adaption, system adaption, network adaption and the like. A static release library can be used only when complied together with a platform porting adaption layer, a platform application and possibly included application configuration data to form executable software for release.

It should be noted that the separated deployment method of RSSP-I safety protocol disclosed by the embodiment has advantageous effects as follows:
(1) By developing a series of adaption layers, for different architecture platforms and functional modules, protocol deployment on different architecture platforms can be implemented.
(2) For different application scenarios, a safety function portion and a non-safety function portion of the RSSP-I communication protocol are subjected to separated deployment, so that safety of the RSSP-I communication protocol is greatly improved.

The foregoing embodiments merely are preferred embodiments of the disclosure, and not intended to define the invention, as defined by the appended claims.

## Claims

1. A separated deployment method of Railway Signal Safety Communication Protocol I, RSSP-I, safety protocol, **characterized in** comprising:
adding different adaption layers for a protocol stack, wherein the adaption layers include a D Interface, D-IF, adaption layer, an App Adaption Layer, AAL, a Network Adaption Layer, NAL, and a System Adaption Layer, SAL, and
compiling all functional modules of an RSSP-I of the protocol stack into static logic libraries and deploying the static logic libraries into A, B and C machines by utilizing the corresponding adaption layers;
wherein each of the A and B machines is a logic processing unit which undertakes safety function, and the C machine is a communication unit which does not undertake safety function.

2. The separated deployment method of RSSP-I safety protocol according to claim 1, wherein the functional modules of the RSSP-I include a SFM layer and a CFM layer, the SFM layer is a safety functional module, the CFM layer is a non-safety functional module and the SFM layer and the CFM layer are of a logic structure from top to bottom.

3. The separated deployment method of RSSP-I safety protocol according to any one of claims 1 to 2, wherein the compiling all functional modules of an RSSP-I of the protocol stack into the static logic libraries and deploying the static logic libraries into the A and/or B machine by utilizing the corresponding adaption layers, specifically includes:
in a platform with an A/B architecture, compiling all functional modules of the RSSP-I of the protocol stack into static logic libraries, and implementing the AAL, the NAL and the SAL in the A/B machine, to deploy the static logic libraries into a Central Processing Unit, CPU, of the A/B machine.

4. The separated deployment method of RSSP-I safety protocol according to any one of claims 1 to 3, wherein the compiling all functional modules of an RSSP-I of the protocol stack into static logic libraries and deploying the static logic libraries into the A and/or B machine by utilizing the corresponding adaption layers, further includes:
respectively compiling the SFM layer and the CFM layer of all functional modules of the RSSP-I of the protocol stack into two static logic libraries; and
deploying the static logic library obtained by compiling the SFM layer into the CPU of the A/B machine, and deploying the static logic library obtained by compiling the CFM layer into a CPU of the C machine.

5. The separated deployment method of RSSP-I safety protocol according to any one of claims 1 to 4, wherein the SFM layer and the CFM layer of functional modules of the RSSP-I are connected by the D-IF adaption layer.

## Patentansprüche

1. Getrenntes Verfahren zur Bereitstellung eines Eisenbahnsignalsicherheitskommunikationsprotokolls I, RSSP-I, **dadurch gekennzeichnet, dass** es umfasst:
Hinzufügen verschiedener Anpassungsschichten für einen Protokollstapel, wobei die Anpassungsschichten eine D-Schnittstelle, DIF, eine D-IF-Anpassungsschicht, eine App-Anpassungsschicht, AAL, eine Netzwerkanpassungsschicht, NAL, und eine Systemanpassungsschicht, SAL, umfassen, und
Kompilieren aller Funktionsmodule eines RSSP-I des Protokollstapels in statische Logikbibliotheken und Einsatz der statischen Logikbibliotheken in A-, B- und C-Maschinen unter Verwendung der entsprechenden Anpassungsschichten;
wobei jede der A- und B-Maschinen eine logische Verarbeitungseinheit ist, die eine Sicherheitsfunktion übernimmt, und die C-Maschine eine Kommunikationseinheit ist, die keine Sicherheitsfunktion übernimmt.

2. Getrenntes Verfahren zur Bereitstellung des RSSP-I-Sicherheitsprotokolls gemäß Anspruch 1, wobei die Funktionsmodule des RSSP-1 eine SFM-Schicht und eine CFM-Schicht umfassen, die SFM-Schicht ein Sicherheitsfunktionsmodul ist, die CFM-Schicht ein Nichtsicherheitsfunktionsmodul ist und die SFM-Schicht und die CFM-Schicht eine logische Struktur von oben nach unten aufweisen.

3. Getrenntes Verfahren zur Bereitstellung des RSSP-I-Sicherheitsprotokolls gemäß einem der Ansprüche 1 bis 2, wobei das Kompilieren aller Funktionsmodule eines RSSP-I des Protokollstapels in die statischen Logikbibliotheken und der Einsatz der statischen Logikbibliotheken in der A- und/oder B-Maschine unter Verwendung der entsprechenden Adaptionsschichten, insbesondere umfasst:
in einer Plattform mit einer A/B-Architektur, Kompilierung aller Funktionsmodule des RSSP-I des Protokollstapels in statische Logikbibliotheken und Implementieren der AAL, der NAL und der SAL in der A/B-Maschine, um die statischen Logikbibliotheken in einer zentralen Verabeitungseinheit, CPU, der A/B-Maschine einzusetzen.

4. Getrenntes Verfahren zur Bereitstellung des RSSP-I-Sicherheitsprotokolls gemäß einem der Ansprüche 1 bis 3, wobei das Kompilieren aller Funktionsmodule eines RSSP-I des Protokollstapels in statische Logikbibliotheken und der Einsatz der statischen Logikbibliotheken in der A und/oder B-Maschine unter Verwendung der entsprechenden Anpassungsschichten, ferner beinhaltet:
jeweils Kompilieren der SFM-Schicht und der CFM-Schicht aller Funktionsmodule des RSSP-I des Protokollstapels in zwei statische Logikbibliotheken; und Einsetzen der statischen Logikbibliothek, die durch Kompilieren der SFM-Schicht erhalten wurde, in der CPU der A/B-Maschine, und Einsetzen der statischen Logikbibliothek, die durch Kompilieren der CFM-Schicht erhalten wurde, in einer CPU der C-Maschine.

5. Getrenntes Verfahren zur Bereitstellung des RSSP-I-Sicherheitsprotokolls gemäß einem der Ansprüche 1 bis 4, wobei die SFM-Schicht und die CFM-Schicht von Funktionsmodulen des RSSP-I durch die D-IF-Anpassungsschicht verbunden sind.

## Revendications

1. Procédé de déploiement séparé d'un Protocol de Communication de Sécurité des Signaux Ferroviaires I, à savoir d'un Protocol de Sécurité RSSP-I, **caractérisé en ce qu'**il comprend les étapes suivantes de:
ajouter des couches d'adaptation différentes à une pile de protocole, dans lequel les couches d'adaptation comprennent une interface D, D-IF, une couche d'adaptation D-IF, une couche d'adaptation d'application, AAL, une couche d'adaptation de réseau, NAL, et une couche d'adaptation de système, SAL,
et
compiler tous les modules fonctionnels d'un RSSP-I de la pile de protocole en des bibliothèques logiques statiques et déployer les bibliothèques logiques statiques dans des machines A, B et C en utilisant les couches d'adaptation correspondantes ;
dans lequel chacune des machines A et B est une unité de traitement logique, qui remplit une fonction de sécurité, et la machine C est une unité de communication, qui ne remplit pas de fonction de sécurité.

2. Procédé de déploiement séparé du protocole de sécurité RSSP-I selon la revendication 1, dans lequel les modules fonctionnels du RSSP-I comprennent une couche SFM et une couche CFM, la couche SFM étant un module fonctionnel de sécurité, la couche CFM étant un module fonctionnel de non-sécurité, et la couche SFM et la couche CFM comprennent une structure logique du haut vers le bas.

3. Procédé de déploiement séparé du protocole de sécurité RSSP-I selon l'une quelconque des revendications 1 à 2, dans lequel la compilation de tous les modules fonctionnels d'un RSSP-I de la pile de protocole en les bibliothèques logiques statiques et le déploiement des bibliothèques logiques statiques dans les machines A et/ou B en utilisant les couches d'adaptation correspondantes comprend notamment les étapes de:
compiler, dans une plateforme ayant une architecture A/B, tous les modules fonctionnels d'un RSSP-I de la pile de protocole en des bibliothèques logiques statiques et mettre en œuvre la AAL, la NAL et la SAL dans la machine A/B, déployer les bibliothèques logiques statiques dans une Unité de Traitement Central, CPU, de la machine A/B.

4. Procédé de déploiement séparé du protocole de sécurité RSSP-I selon l'une quelconque des revendications 1 à 3, dans lequel la compilation de tous les modules fonctionnels d'un RSSP-I de la pile de protocole en des bibliothèques logiques statiques et le déploiement des bibliothèques logiques statiques dans les machines A et/ou B en utilisant les couches d'adaptation correspondantes comprend en outre les étapes de:
compiler chacune la couche SFM et de la couche CFM de tous les modules fonctionnels du RSSP-I de la pile de protocole en deux bibliothèques logiques statiques ; et
déployer la bibliothèque logique statique obtenue en compilant la couche SFM dans la CPU de la machine A/B et déployer la bibliothèque logique statique obtenue en compilant la couche CFM dans une CPU de la machine C.

5. Procédé de déploiement séparé du protocole de sécurité RSSP-I selon l'une quelconque des revendications 1 à 4, dans lequel la couche SFM et la couche CFM de modules fonctionnels du RSSP-I sont reliées l'une à l'autre par la couche d'adaptation D-IF.
